# EUROPÄISCHE PATENTANMELDUNG

(11) **EP 0 524 151 A1**
(43) Veröffentlichungstag der Anmeldung: **20.01.1993**
(21) Anmeldenummer: 92810530.3
(22) Anmeldetag: 10.07.1992
(51) Int. Cl.: A23C 19/028

(54) **Verfahren zur Herstellung eines schmelzbaren Halbhartkäses**

(30) Priorität: 18.07.1991 CH 2147/91
(71) Anmelder: Verband nordostschweizerischer Käserei- und Milchgenossenschaften, CH-8401 Winterthur (CH)
(72) Erfinder: Hugentobler, René, CH-8800 Thalwil (CH); Studer, Fritz, CH-8603 Schwerzenbach (CH)
(74) Vertreter: Patentanwälte Breiter + Wiedmer AG

(57) **Zusammenfassung**

In der nachstehenden Reihenfolge wird schmelzbarer Halbhartkäse, insbesondere des Typs Raclette-Käse, hergestellt:
- Standardisierte Milch in einer Ultrafiltrationsanlage konzentrieren,
- das Permeat durch Wasserzugabe zum noch nicht auf das Endverhältnis konzentrierten Retentat verdünnen,
- das konzentrierte Retentat kühlen, gesamthaft mit einer Milchsäurekultur beimpfen und vorreifen,
- das vorgereifte Retentat mit Labextrakt versetzen, eindicken und in definierte Stücke zerschneiden,
- den Käsebruch in das verdünnte Permeat geben, ausrühren und pressen, und
- den Käse abtropfen, in ein Salzbad geben und ausreifen.

## Beschreibung

Die Erfindung bezieht sich auf ein Verfahren zur Herstellung eines schmelzbaren Halbhartkäses, insbesondere des Typs Raclette-Käse, aus in einer Zentrifuge standardisierter Milch.

In herkömmlicher Weise wird schmelzbarer Halbhartkäse ebenfalls aus standardisierter Milch, meist mit einem Fettgehalt von 2,8 bis 3,0 %, hergestellt. Auf jeden Fall wird der Fettgehalt so eingestellt, dass ein vollfetter Käse entsteht. Bei der Fütterung von Silofutter wird die Vollmilch baktofugiert. Das Baktofugat wird auf etwa 140° C erhitzt und der Milch wieder zugefügt. Nach dieser Baktofugation erfolgt die Pasteurisation, z.B. während etwa 10 Sekunden bei etwa 73° C. In dem Fachmann bekannter Weise erfolgt darauf das Vorreifen, Einlaben, Schneiden und Bruchwaschen. Der Käsebruch wird ausgerührt, je nach der zur Verfügung stehenden Anlage einstufig oder zweistufig gepresst, abgetropft, in ein Salzbad gegeben und abschliessend im Reifungskeller gelagert.

Die Erfinder haben sich die Aufgabe gestellt, ein Verfahren der eingangs genannten Art zu schaffen, mit welchem ein schmelzbarer Halbhartkäse hergestellt wird, der sich in bezug auf Schmelzeigenschaften, Aussehen und Geschmack nicht von einem traditionell hergestellten Käse unterscheidet, jedoch eine höhere Käseausbeute aufweist.

Die Aufgabe wird erfindungsgemäss nach dem Kennzeichen von Patentanspruch 1 gelöst. Bevorzugte und weiterbildende Ausführungsformen der Erfindung sind Gegenstand von abhängigen Patentansprüchen.

Konventionelle Filtrations-Verfahren und die Mikrofiltration vermögen Bakterien und Fettkügelchen aus der Milch abzutrennen. Ebenso wird ein Teil der Kasein-Micelle entfernt. Molkenproteine und kolloidale Verbindungen dagegen passieren einen Mikro- und selbstverständlich auch einen konventionellen Filter.

Die für die vorliegende Anmeldung angewandte Ultrafiltration zur Entfernung aller, auch der kolloidalen Proteine, aus wie bei der üblichen Herstellung von schmelzbarem Halbhartkäse standardisierter und ggf. baktofugierter Milch ist an sich bekannt, beispielsweise aus der WO-A1 91/00690. Diese beschreibt ein Verfahren zur kontinuierlichen Herstellung von Hüttenkäse. Die DE-A1 2932767 beschreibt ein Verfahren zur Herstellung eines halbharten Käses unter Verwendung eines durch Ultrafiltration erhaltenen Magermilch-Konzentrats. Weiter wird gemäss der DE-A1 3141914 eine Ultrafiltration bei einer Temperatur von mindestens 60° C dazu gebraucht, Frischkäse mit erhöhtem Molkeeiweiss-Anteil herzustellen.

Ein Ultrafilter bekannter Bauart umfasst eine semipermeable Membrane, welche auch kolloidal gelöste Stoffe, beispielsweise Eiweisse, zurückhält. Dabei werden Drücke bis zu einem Bereich von etwa 5 bar angewendet.

Bei der Ultrafiltration nicht im Retentat zurückgehalten werden Laktose und übrige lösbare Stoffe im Milchserum und natürlich das Wasser selbst, welche das Permeat bilden.

In keinem der bezüglich der Ultrafiltration den massgebenden Stand der Technik bildenden Patente wird jedoch angegeben oder auch nur angedeutet, dass die Ultrafiltration im Zusammenwirken mit weiteren Verfahrensschritten die Herstellung eines schmelzbaren Halbhartkäses, insbesondere des Typs Raclette-Käse, bezweckt oder ermöglicht. Der Grund liegt wohl darin, dass schmelzbare Halbhartkäse, dies ist eine wesentliche Voraussetzung, höchstens etwa 2 % Molkeeiweisse enthalten dürfen, was an sich gegen die Anwendung einer Ultrafiltration spricht.

Die wichtigste Eigenschaft des erfindungsgemäss hergestellten Halbhartkäses ist seine Schmelzbarkeit. Diese ist nur gewährleistet, wenn alle Schritte gemäss dem Kennzeichen von Patentanspruch 1 in der angegebenen Reihenfolge und vollständig durchgeführt werden, ohne Hinzufügung weiterer Schritte. Folgende Punkte sind besonders zu beachten:
- Der Konzentrationsfaktor C des Retentats während der Ultrafiltration darf nicht mehr als etwa 4,5 betragen, sonst verschlechtert sich die Schmelzbarkeit wegen des hohen Molkenprotein-Gehalts deutlich. Unter dem Konzentrationsfaktor C wird das Verhältnis der Ausgangsmilch zum Retentat verstanden.
- Mit der Diafiltration, einem Teil der Ultrafiltration, bei welchem das Permeat durch Wasserzugabe zum noch nicht auf das Endverhältnis konzentrierten Retentat verdünnt wird, wird der Laktosegehalt so eingestellt, dass nach der Milchsäuregärung im Käse ein pH-Wert von 5 oder knapp darüber resultiert. Auch dieser Wert beeinflusst die Schmelzbarkeit sehr stark.
- Auf eine Konzentrat-Pasteurisation wird verzichtet, weil dadurch eine Molkeneiweissdenaturierung vermieden wird. Weiter würde das Mineralsalz-Gleichgewicht zusätzlich verändert und z.B. die Schmelzbarkeit und der Geschmack verschlechtert.
- Ebenfalls wird auf die Zugabe von Kalziumchlorid zum Konzentrat verzichtet. Die Lab-Fähigkeit ist auch ohne diese Zugabe, welche je nach Dosierung die Schmelzbarkeit des Halbhartkäses mehr oder weniger beeinträchtigt, genügend.
- Beim Vorreifen ist der pH-Wert sehr wichtig. Da die Löslichkeit des Kalziums vom pH-Wert abhängig ist, muss im Zeitpunkt des Molkenabflusses der ideale pH-Wert vorherrschen. Dieser ideale Wert liegt, im Zeitpunkt des Schneidens, knapp oberhalb 6. Durch diese Massnahme kann die Schmelzbarkeit positiv beeinflusst werden.

Die für den Konzentrations-Prozess durch Ultrafiltration standardisierte und ggf. baktofugierte Milch ist während 5 - 60 Sekunden, vorzugsweise während etwa 10 Sekunden, bei einer Temperatur von 68 - 75°C, vorzugsweise etwa 73° C, pasteurisiert und dann auf wenigstens 55° C, vorzugsweise 40 - 52° C, insbesondere etwa 50° C, rückgekühlt worden.

Die Ultrafiltration der standardisierten Milch ist, wie bereits angetönt, eine unabdingbare Voraussetzung für die vorliegende Erfindung. Die kolloidalen Bestandteile werden als Retentat aufkonzentriert, während das Permeat die semi-permeable Membran der Ultrafilteranlage passiert.

Die Ultrafiltration erfolgt vorzugsweise bei einer Temperatur von etwa 50° C, sie wird zweckmässig fortgesetzt, bis der Konzentrationsfaktor C bei etwa 4 liegt.

Kurz vor dem Erreichen der vorgegebenen Konzentration wird eine Diafiltration durchgeführt. Dabei wird dem Retentat Wasser zugegeben, bis der Brixgehalt im Permeat einen Wert von 3 - 4°, vorzugsweise etwa 3,5°, erreicht. Der Brixgehalt ist eine Kennziffer für die Trockenmasse im auch Milchserum genannten Permeat.

Das Retentat wird, im Zusammenwirken von Ultrafiltration und Wasserzugabe, auf einen Endwert an Trockenmasse zwischen 20 und 40 %, vorzugsweise etwa 30 %, eingestellt. Hier und im übrigen bedeutet "%" Gewichtsprozente.

Im wesentlichen dient die Diafiltration der Entfernung von Zucker durch Auswaschen von Laktose. In konventionellen Verfahren erfolgt dies durch das Bruchwaschen.

Es liegt im Ermessen des Fachmanns, den Laktosegehalt, welcher beim Reifeprozess bakteriell abgebaut wird, so einzustellen, dass nach der Milchsäuregärung im Käse ein pH-Wert im Bereich von 5,0 - 5,3, insbesondere 5,10 - 5,15, entsteht.

Zur Auslösung der Vorreifung wird das der Ultrafiltrations-Anlage entnommene, diafiltrierte Retentat vorzugsweise auf etwa 30° C abgekühlt und mit einer Kultur versetzt, beispielsweise einer mesophilen Milchsäurekultur, welche eingemischt wird, bis ein Anteil von 2 % erreicht ist. Nach einer Vorreifungszeit von in der Regel einigen Stunden ist der vorgegebene pH-Wert im Bereich von 6,1 - 6,5, bevorzugt 6,2 - 6,3, erreicht. Die erhöhte Temperatur von etwa 30° C wird während des gesamten Vorreifens aufrecht erhalten.

Das leicht angesäuerte, vorgereifte Retentat wird eingelabt, vorzugsweise mit einem Enzymkonzentrat aus dem Labmagen von Kälbern, welches die Eiweiss-Struktur der Milch ändert. Die Milchproteine werden in eine unlösliche Form gebracht und ausgefällt. Dabei entsteht eine schnittfeste gallertartige Masse.

Die ausgefällte gallertartige Masse wird schonend in definierte Stücke geschnitten, vorzugsweise Würfel mit 3 bis 6 mm Kantenlänge. Die Grösse der Würfel richtet sich nach dem gewünschten Endwassergehalt. Soll ein weicherer Käse hergestellt werden, werden tendenzmässig grössere Stücke geschnitten, bei einem härteren Käse kleinere Stücke.

Von wesentlicher Bedeutung ist, dass der Käsebruch in das verdünnte Permeat gegeben und gründlich ausgerührt wird. Damit kann vermieden werden, dass der hergestellte Käse ungewollte Lufteinschlüsse hat. Bevorzugt wird der Käsebruch in einem Mischverhältnis von 1:1 bis 1:3, insbesondere etwa 1:1,5, in das nach der Ultrafiltration anfallende Permeat einer Temperatur von vorzugsweise 30 - 40° C, insbesondere von etwa 35° C, gegeben und anschliessend während etwa 5 Minuten ausgerührt.

Das Formen der Käse erfolgt anlagebedingt in einer oder in zwei Stufen. Nach beiden Varianten wird vorerst mit einem niedrigeren, dann mit einem höheren Druck gearbeitet, wobei die geformten Käse vor dem Übergang zum höheren Druck gewendet werden können.

Nach dem Formen der Käse wird das Ende der Milchsäure-Gärung, bei welcher die Laktose in Milchsäure umgewandelt und Molke abgeschieden wird, abgewartet. Bei diesem Reifungsvorgang, auch mit Abtropfen bezeichnet, verliert der Käse einen Teil seiner Flüssigkeit.

Nach einigen Stunden ist die Milchsäure-Gärung in der Regel beendet, der vorgegebene pH-Wert im Bereich von oder knapp oberhalb 5 ist erreicht. Der Käse wird in ein Salzbad an sich bekannter Zusammensetzung gelegt. Dieses dient der Konservierung und der Geschmacksbildung, indem Salze und allenfalls Kräuter- und/oder Gewürzextrakte, die dem Salzbad beigegeben werden, in den Käselaib eindiffundieren.

Die Geschmacksbildung kann auch, zusätzlich oder für sich, dadurch erfolgen, dass beim Ausrühren des Käsebruchs Fremdpartikel zugegeben werden, beispielsweise Pfefferkörner.

Die abschliessende Reifung muss bei in bezug auf die Temperatur und die Luftfeuchtigkeit kontrollierten Bedingungen erfolgen. Die Temperatur liegt vorzugsweise im Bereich von 9 bis 10° C, die relative Luftfeuchtigkeit im Bereich von 90 bis 95 %. Die Lagerung im Reifungskeller erfolgt bevorzugt während wenigstens 12 Wochen und dauert bis zur Auslieferung.

Schmelzbarer Halbhartkäse wird in an sich bekannter Weise mit Rinde oder ohne Rinde in einer Folie hergestellt.

Mit dem erfindungsgemässen Verfahren, welches kontinuierlich oder batchweise durchgeführt wird, können schmelzbare Halbhartkäse hergestellt werden, die sich weder in den Schmelzeigenschaften noch in Aussehen oder Geschmack von einem in üblicher Weise hergestellten Käse unterscheiden. Dank der Ultrafiltration ist es möglich, einen Teil der Molkenproteine dem Käse zuzuführen, was bei der traditionellen Käseherstellung nicht realisierbar ist. Durch diese Retention wird im Zusammenwirken mit den erfindungsgemässen Schritten eine etwa 6 % höhere Käseausbeute erreicht.

### Beispiel

Die zu verarbeitende Milch wird mit einer Zentrifuge auf einen Fettgehalt von 2,9 % standardisiert. Anschliessend wird die Milch baktofugiert, wobei das Baktofugat auf 140° C erhitzt und der Milch wieder zugefügt wird. Nach der Baktofugation erfolgt die Pasteurisation bei 73°C während 10 Sekunden und die Rückkühlung auf 50° C. Die Milch ist für den Konzentrationsprozess bereit.

Die Konzentration erfolgt mit einer Ultrafiltrations-Anlage bei einer Temperatur von 50° C. Dieser Prozess läuft ab, bis ein Konzentrationsfaktor C von 4 erreicht ist. Vor dem Erreichen der Endkonzentration des Retentats wird die Diafiltration durchgeführt, dabei wird Wasser zugegeben, bis der Brixgehalt im Permeat 3,5° erreicht. Am Ende der Ultrafiltration weist das Retentat einen Trockenmassengehalt von 30 % auf.

Das Retentat wird nach dem Konzentrieren auf eine Vorreife-Temperatur von 30° C abgekühlt und mit 2 % mesophiler Milchsäurekultur beimpft. Die Vorreifung dauert 3,5 Stunden, nach dieser Zeit ist ein pH-Wert von 6,2 erreicht.

Zum Einlaben wird 25 ml Labextrakt pro 100 kg Retentat zugegeben, damit wird eine Dickungszeit von 25 - 30 Minuten erreicht. Das koagulierte Retentat wird mit einer Schneidevorrichtung in Würfel von 4 mm Länge geschnitten. Diese Würfel werden in das Permeat gegeben, das bei der Ultrafiltration anfällt. Die Temperatur der Flüssigkeit liegt bei 35° C. Das Mischverhältnis beträgt 1 Teil Käsebruch und 1,5 Teile Permeat. Der Käsebruch wird während 5 Minuten im warmen Permeat gerührt, anschliessend setzt er sich.

Das Vorpressen beginnt mit einem Anfangsdruck von 50 g pro cm² Käse während 5 Minuten und endet mit einem Druck von 75 g pro cm² Käse während 10 Minuten. Das Pressen wird ebenfalls mit zwei verschiedenen Drücken durchgeführt. Zuerst wird während 10 Minuten mit 100 g pro cm² Käse gepresst, nach dem Wenden noch während 20 Minuten mit 200 g pro cm² Käse. Nach Beendigung der Milchsäuregärung, nach 3 Stunden, haben die Käse einen pH-Wert von 5,15 und kommen 20 Stunden ins Salzbad. Die Reifung erfolgt während 12 Wochen bei 9,5° C und einer relativen Luftfeuchtigkeit von 92 %.

## Patentansprüche

1. Verfahren zur Herstellung eines schmelzbaren Halbhartkäses, insbesondere des Typs Raclette-Käse, aus in einer Zentrifuge standardisierter Milch,
dadurch gekennzeichnet,dass
in der nachstehenden Reihenfolge
- die standardisierte Milch bei einer Temperatur im Bereich von 45 - 55° C in einer Ultrafiltrationsanlage bis zu einem Konzentrationsfaktor (C) von 2 bis 4,5 konzentriert wird,
- das Permeat durch Wasserzugabe zum noch nicht auf das Endverhältnis konzentrierten Retentat auf einen Brixgehalt von 3 - 4° verdünnt wird,
- das konzentrierte Retentat auf eine Temperatur von 25 - 35°C gekühlt, gesamthaft mit einer Milchsäurekultur beimpft und bis zum Erreichen eines pH-Wertes von 6,1 - 6,5 vorgereift wird,
- das vorgereifte Retentat mit Labextrakt versetzt, eingedickt und in definierte Stücke zerschnitten wird,
- der Käsebruch in das verdünnte Permeat gegeben, während höchstens 10 Minuten ausgerührt und wenigstens einstufig gepresst wird, und
- der Käse abgetropft, in ein Salzbad gegeben und abschliessend bei einer Temperatur von 8 - 11° C und einer relativen Luftfeuchtigkeit von wenigstens 90 % ausgereift wird.

2. Verfahren nach Anspruch 1, dadurch gekennzeichnet, dass bei einer Temperatur von etwa 50° C ultrafiltriert und vorzugsweise ein Konzentrationsfaktor (C) von etwa 4 eingestellt wird.

3. Verfahren nach Anspruch 1 oder 2, dadurch gekennzeichnet, dass das Permeat auf einen Brixgehalt von etwa 3,5° verdünnt wird.

4. Verfahren nach einem der Ansprüche 1 bis 3, dadurch gekennzeichnet, dass der Trockenmassengehalt des Retentats auf einen Endwert von 20 - 40 %, vorzugsweise etwa 30 %, eingestellt wird.

5. Verfahren nach einem der Ansprüche 1 bis 4, dadurch gekennzeichnet, dass das der Ultrafiltrationsanlage entnommene Retentat auf eine Temperatur von etwa 30° C abgekühlt, mit etwa 2 % mesophiler Milchsäurekultur beimpft und vorzugsweise bis zum Erreichen eines pH-Wertes von 6,2 - 6,3 vorgereift wird.

6. Verfahren nach einem der Ansprüche 1 bis 5, dadurch gekennzeichnet, dass das vorgereifte Retentat mit etwa 25 ml Labextrakt pro 100 kg Retentat eingelabt wird.

7. Verfahren nach einem der Ansprüche 1 bis 6, dadurch gekennzeichnet, dass das koagulierte Retentat in Würfel, vorzugsweise von 3 bis 6 mm, insbesondere etwa 4 mm Kantenlänge, geschnitten wird.

8. Verfahren nach einem der Ansprüche 1 bis 7, dadurch gekennzeichnet, dass der Käsebruch in einem Mischverhältnis von 1:1 bis 1:3, vorzugsweise 1:1,5, in das nach der Diafiltration anfallende Permeat einer Temperatur von 30 - 40° C, vorzugsweise von 35° C, gegeben und anschliessend während etwa 5 Minuten gerührt wird.

9. Verfahren nach einem der Ansprüche 1 bis 8, dadurch gekennzeichnet, dass der im Permeat gesetzte Käsebruch vorerst während etwa 5 Minuten mit einem Druck von etwa 50 g pro cm² Käse, nach einem allfälligen Wenden während etwa 10 Minuten mit einem Druck von etwa 75 g pro cm² Käse vorgepresst und anschliessend während etwa 10 Minuten mit einem Anfangsdruck von etwa 100 g pro cm² Käse, nach einem allfälligen Wenden während etwa 20 Minuten mit einem Druck von etwa 200 g pro cm² gepresst wird.

10. Verfahren nach einem der Ansprüche 1 bis 9, dadurch gekennzeichnet, dass der Käse nach dem Erreichen eines pH-Wertes von 5,0 - 5,3, vorzugsweise 5,10 - 5,15, während etwa 20 Stunden in ein Salzbad gelegt und abschliessend während etwa 12 Wochen, bei einer Temperatur von 9 - 10° C und einer relativen Luftfeuchtigkeit von 90 - 95 %, ausgereift wird.
